# EUROPEAN PATENT APPLICATION

(11) **EP 4 826 277 A1**
(43) Date of publication of application: **21.10.2026**
(21) Application number: 25170679.2
(22) Date of filing: 15.04.2025
(51) Int. Cl.: F16H 48/40

(54) **DIFFERENTIAL ASSEMBLY AND AXLE ASSEMBLY**

(71) Applicant: Meritor Heavy Vehicle Systems Cameri SpA, 28062 Cameri (NO) (IT)
(72) Inventor: Varela, Tomaz, 28062 Cameri (IT)
(74) Representative: Whitfield, Jack Stephen

(57) **Abstract**

Aspects of the present invention relate to a differential assembly. The differential assembly comprises a differential case having a first case portion and a second case portion, configured to hold a differential with a spider gear assembly. A central plane of the spider gear assembly is perpendicular to a rotational axis of a ring gear of the differential, wherein the first case portion is connected to the second case portion with at least one removable fastener. The connection of the first case portion to the second case portion is offset relative to the central plane. Further, the invention relates to an axle assembly.

## Description

### Technical Field

The present disclosure relates to a differential assembly and an axle assembly. Aspects of the invention relate to a differential assembly, and an axle assembly.

### Background

In some applications, it may be required that a driver-controlled differential lock (DCDL) clutch needs to be installed on the gear side of the casing of a differential. A DCDL provides maximum traction potential to each wheel end of an axle when the vehicle requires it.

However, manufacturing of robust casings for these differentials may be challenging and require laser welding or forging, which may be cost intensive.

The present invention aims to provide one or more improvements over the prior art.

### Summary of Invention

Aspects and embodiments of the invention provide a differential assembly and axle assembly as claimed in the appended claims.

According to an aspect of the present invention, a differential assembly is provided comprising a differential case having a first case portion and a second case portion, configured to hold a differential with a spider gear assembly, wherein a central plane of the spider gear assembly is perpendicular to a rotational axis of a ring gear of the differential, wherein the first case portion is connected to the second case portion with at least one removable fastener, and wherein the connection of the first case portion to the second case portion is offset relative to the central plane.

A differential assembly may be considered as a system that allows for the difference in distance or speed of rotation between two wheels or other rotating parts. A differential may be configured to distribute engine torque to the wheels, allowing each wheel to rotate at a different speed, especially during turns. It may further be configured to lock the axis to force the two wheels or other rotating parts to rotate at the same speed.

A ring gear, also known as a crown wheel, is a gear of the differential assembly. It may mesh with a drive pinion to transmit power from a drive shaft to the differential. The ring gear's primary functions may be considered to change the axis of rotation by 90 degrees and provide a reduction in the gear ratio. The latter may be achieved by having fewer teeth on the pinion than the ring gear.

The ring gear may be attached to the differential case.

The spider gears, also known as differential pinions, may be located inside the differential case and may be mounted on a common carrier, known as the spider. These gears may be in constant mesh with the side gears, which are connected to the axle shafts leading to the wheels or another rotating part.

The ring gear may be arranged on the outer edge of the differential case. The spider gears may be arranged centrally within the case.

A differential carrier case may be considered as a volumetric body that is configured to house internal components of a differential, in particular acting as a protective barrier against outside elements such as dirt or debris. It may be configured to hold the differential securely, ensuring the smooth operation of the differential assembly.

The first and second case portion may be part of the differential case or may form the differential case. In other words, the differential case may be formed of a first and second portion or may comprise these two portions. It may also have further portions. These portions may be mainly configured to shield the differential, in particular the spider gear assembly, from the environment. The differential case may have parts which do not directly add to its function to shield the differential from the environment, which may not be considered as a case portion.

The first and second portion may differ in size. Also, the first and second portion may shield a different percentage of the differential, in particular of the spider gear assembly. The ratio may be between 10:90 and 55:45, in particular between 40:60 and 20:80.

A central plane of the spider gear assembly can be considered to lie between sun gears that transfer the torque from a pinion gear to both parts of the axle which may rotate at different speeds. The planet gears may be formed at the end of each part of the axle that does not have the rotating element, in particular the wheel.

A central plane of the spider gear can also be described as being defined by the rotation of planet gears along a circular path, wherein the planet gears interact with the sun gears to transfer the torque to both parts of the axle.

A spider gear assembly may be a set of gears located at the differential, in particular in its center. It is configured to redirect rotational energy from the driveshaft to the wheels, and to allow the wheels to rotate at different speeds when the vehicle is turning. The spider gear may include, in particular four, planet gears that do not rotate on their axis when the resistance from both rotating parts (such as wheels) is the same. The spider gear assembly may further comprise, in particular two, sun gears configured to transfer the torque to the two parts of the axle connected via the differential.

A removeable fastener may be a component that can be removed and reattached, allowing for the connection and disconnection of the first case portion to the second case portion. It may be configured to join the first and second portion, with the option to be removed and reused without damaging them.

The connection of the first case portion to the second case portion being offset relative to the central plane can be understood as the position of the connection between the two portions as being at a defined distance from the central plane. In other words, the position where the first and section portion of the case are connected does not lie in the central plane.

The connection may be of any suitable form. In particular, it may be a circular ring. The connection may define at least one connecting plane, which is located at a position away from the central plane.

The first case portion and the second case portion can be easily connected and disconnected with the removeable fastener. This way, the differential assembly can be maintained cost effectively, as faulty parts can be individually replaced without replacing the whole assembly. The offset connection allows for easier separation of the parts of the differential case, facilitating access to the spider gear assembly for maintenance. For example, the larger of the first or second case portion can be removed to gain access to most of the parts in the differential, wherein the smaller part of the first or second case portion can remain in place, holding the differential. Alternatively, the smaller portion can also be removed leaving the larger portion in place. Removing a smaller portion requires less effort and time, making maintenance more efficient. In summary, the connection of the first case portion to the second case portion being offset relative to the central plane allows for a flexible, efficient access to the differential and improved maintenance.

Optionally, the differential assembly may comprise the first case portion connected to the second case portion exclusively with the at least one removable fastener.

In other words, it may be provided that only removeable fasteners are used to connect the first and second portions.

It may be provided that no connecting means are used which are suited to permanently connect the first and second portion of the casing. Examples for such permanently connecting means include welding, brazing, riveting and glueing.

Using only removable fasteners simplifies disassembly and reassembly, making it easier to replace faulty parts. Fewer tools, in particular only one, are required to disconnect the differential case if the connection is solely established by the removable fastener.

Optionally, the differential assembly may comprise the at least one removable fastener facing a shaft of a spider gear.

The shaft of a spider gear may be a rod-like component that arranges the gear within the differential case.

To allow for the at least one removable fastener to face the shaft of the spider gear, the first and/or second portion of the case may have a through hole. The through hole may be used as a service opening for maintenance when the removeable fastener is removed.

Thus, the removable fastener facing the spider gear shaft ensures secure positioning while allowing for straightforward replacement of the gear.

Optionally, the differential assembly may comprise the second case portion may have a spline configured to engage with a differential lock.

As spline may be considered as a ridge or tooth that matches with a groove in a mating piece and transfers torque to it, maintaining the angular correspondence between them.

A differential lock may be configured to lock an axis. In other words, the differential lock may force both wheels or other rotating elements connected via the differential to rotate with the same speed.

In other words, the second case portion may have a ridge or tooth that engages with corresponding grooves in a differential lock.

This way, the second case portion can directly engage with the differential lock, which improves the mechanical stability and the durability of the connection. Further, the connection via a spline can be easily dismounted for maintenance.

Optionally, the spline may be induction hardened.

Induction hardening may be considered as a type of surface hardening in which a metal part, in particular the spline or a portion of the second case portion including the spline, is induction-heated and then quenched. The quenched metal undergoes a martensitic transformation, increasing the hardness of the part. This has the advantage that not the whole part has to undergo the treatment, so that the hardening only affects the spline.

Optionally, the first case portion may have a gear mounting flange.

A gear mounting flange may be understood as a flange that is configured to mount a part which has a gear. It may be arranged on one end of the first case portion, in particular the end facing away from the spider gear assembly.

Optionally, the first case portion may be gearless.

In other words, the first case portion may not directly engage with other gears, teeth, grooves etc.

This way, the first case portion may not have any portions that require a hard material. Instead, a material that is lighter or more cost effective may be used. This may also improve the cost for maintenance.

Optionally, the the first case portion and the second case portion are at least partially formed as a solid of revolution and arranged concentric to one another.

A solid of revolution may be understood as a volumetric body that may be defined by a two-dimensional path that is rotated around an axis. Examples of solids of revolution are cylinders (defined by a rectangle), a sphere (defined by a half circle) etc.

A solid of revolution may be produced by turning but can also be obtained by other means.

Case portions designed as solid of revolution may encompass bodies that slightly deviate from solid of revolution, in particular if parts have been attached thereto.

Concentric design of solids of revolution ensures balanced rotation, reducing wear and tear, thus increasing the length of time intervals between maintenance.

Optionally, the differential assembly may comprise the first connection portion being concentric to the second connection portion.

Concentric connection portions ensure precise alignment, reducing the risk of misalignment during reassembly.

Optionally, the differential assembly may comprise the first connection portion and the second connection portion configured to lie at least partially flat against each other when the first connection portion and the second connection portion are connected to one another.

Flat connection surfaces provide a stable and secure fit, making it easier to separate and reassemble the case portions.

The first and/or second connection portion may comprise at least one seal.

A seal may further improve shielding the differential from the environment and be easily replaced when the first and second portions of the case are being separated for maintenance.

Optionally, the differential assembly may comprise at least the first connection portion or the second connection portion having a circular ring.

Circular ring surfaces facilitate smooth rotation and easier alignment during maintenance.

Optionally, the differential assembly may comprise the first case portion having a flange configured to be connected to the ring gear.

The flange connection to the ring gear allows for easy removal and replacement of the ring gear during maintenance.

Optionally, the differential assembly may comprise the flange being concentric to the rotational axis of the ring gear.

Concentric flange and rotational axis ensure proper alignment, simplifying the reassembly process.

Optionally, the differential assembly may comprise the first case portion made of a different material than the second case portion.

Different materials for the case portions allow for cost-effective manufacturing and targeted material use based on stress requirements.

A further advantage is that the removeable fastener is particularly suited for connecting two different materials, as it may not require a chemical or physical interaction with the materials. If a chemical interaction is required, for example when connecting the first and second portion via welding, it may be necessary to specifically design the welding process to both materials, which may in some cases be impossible.

One material of the two materials may have undergone an additional step for enhancing its mechanical properties, such as hardening, in particular induction hardening.

This way, costly materials can be used where actually needed, which reduces cost during manufacturing and when these parts have to be replaced.

Optionally, the differential assembly may comprise the first case portion at least partially made of ductile iron.

Ductile iron, also known as ductile cast iron, is a type of rich cast iron. Due to its nodular graphite inclusions, ductile iron has a high impact and fatigue resistance.

Using ductile iron for the first case portion provides durability and strength where needed, while still allowing for cost effectiveness.

Optionally, the differential assembly may comprise the second case portion at least partially made of steel.

The steel may be in particular one of alloy steel, stainless steel or tool steel.

Alloy steel, which may be alloyed with other elements than iron in total amounts between 1.0% and 50% by weight, offers a high strength and wear resistance.

Stainless steel, which may be considered as iron with at least chromium and one other element, such as Molybdenum, Carbon, Nickel or Nitrogen, does not only possess high strength, but is also very robust against rust and corrosion.

Tool steel can be considered as a steel with a carbon content between 0.5% and 1.5% and at least one alloying element, in particular at least one of Tungsten, Chromium, Vanadium or Molybdenum.

Generally, steel for the second case portion offers robustness and longevity, reducing the frequency of maintenance.

If the second case portion is smaller than the first case portion, the overall cost of the assembly may be reduced if only the second case is made of a costly material such as steel and the first case portion is made of a less costly material such as ductile iron.

The spline engagement with the differential lock ensures secure locking, which can be easily disengaged for maintenance.

Optionally, the differential assembly may comprise the second case portion connected to the differential lock.

Connection to the differential lock allows for straightforward disconnection and maintenance of the lock mechanism.

Optionally, the differential assembly may comprise the removable fastener configured as at least one of a bolt or a nut and a stud.

Bolts provide a strong and secure connection that can be easily removed and reinstalled, allowing for quick access to internal parts. Nuts can be easily unscrewed and reused, facilitating the disassembly and reassembly of the differential case for maintenance. Studs offer a fixed point for alignment, making it straightforward to reconnect the parts of the differential case accurately after replacing internal components.

According to an aspect of the present invention, an axle assembly is provided comprising a differential assembly comprising a differential case having a first case portion and a second case portion, configured to hold a differential with a spider gear assembly, wherein a central plane of the spider gear assembly is perpendicular to a rotational axis of a ring gear of the differential, wherein the first case portion is connected to the second case portion with at least one removable fastener, wherein the connection of the first case portion to the second case portion is offset relative to the central plane, and at least an axle shaft, an axle housing configured to at least partially enclose the axle shaft, a differential carrier, or an input yoke.

An axle shaft may be configured to transmit a torque from a power source to the wheels of the vehicle or another rotating element. The axle shaft may be coupled to the differential, in particular via a spline.

An axle housing can be considered as a body which is configured to at least partially enclose the axle shaft, thereby shielding the differential assembly, in particular the elements that may not be inside the differential gear such as the ring gear, from the environment.

A differential carrier may be mounted to a housing of the axle. The differential carrier may support components of the differential assembly. For example, the differential carrier may have one or more bearing supports that may receive or support a roller bearing assembly that may rotatably support the differential assembly.

An input yoke may be considered as a device that is coupled to a drivetrain component, such as a drive shaft, that may be coupled to an output of a vehicle transmission or transfer case, which in turn may receive torque from a vehicle power source, such as an engine or motor. Alternatively, the input yoke may be operatively connected to an output of another axle assembly.

The first case portion and the second case portion can be easily connected and disconnected with the removeable fastener. This way, the differential assembly can be maintained cost effectively, as faulty parts can be individually replaced without replacing the whole assembly. The offset connection allows for easier separation of the case portions, facilitating access to the spider gear assembly for maintenance. For example, the larger of the first or second case portion can be removed to gain access to most of the parts in the differential, wherein the smaller part of the first or second case portion can remain in place, holding the differential. Thus, the axle assembly provides the same advantages as described in connection with the differential assembly. Furthermore, the axle assembly provides further parts for transporting torque from a source to a target, such as a wheel.

The axle assembly may comprise further parts that are associated with vehicles, in particular those that may be connected thereto and/or to the differential assembly. For example, the axle assembly may comprise a frame which is configured to hold the assembly in place within a vehicle. Another example is a machine generating torque, in particular a motor.

Optionally, the axle assembly may comprise the axle housing comprising at least a first housing portion and a second housing portion.

Separate housing portions for the axle housing allow for easier access and maintenance of the axle shaft. In other words, the axle assembly's housing two-part form design allows for easy separation of the axle housing, facilitating maintenance of the entire assembly.

Optionally, the axle assembly may comprise the first housing portion and the second housing portion connected by at least one removable housing fastener.

Removable housing fasteners simplify the process of disassembling the axle housing for maintenance. The removable housing fastener provides an easy and cost-effective way to disconnect the first housing portion from the second housing portion.

Optionally, the axle assembly may comprise a connecting plane formed by the connection of the first housing portion and the second housing portion being perpendicular to the central plane.

The perpendicular connecting plane ensures stable and secure assembly, making it easier to separate and reassemble the housing parts during maintenance.

A further aspect of the present invention may be a vehicle having an axle assembly according to the invention and/or a differential assembly according to the invention. This vehicle has the same advantages that are described in detail with the axle assembly and/or the differential assembly.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### Brief Description of Drawings

One or more embodiments of the invention will now be described, by way of example only, with reference to the accompanying drawings, in which:
Figure 1 is a perspective view of an axle assembly according to an embodiment of the invention;
Figure 2 is a perspective view of a differential assembly according to an embodiment of the invention;
Figure 3 is a cross-sectional side view of a differential assembly according to an embodiment of the invention;
Figure 4 is a side view of a differential assembly according to an embodiment of the invention;
Figure 5 is another cross sectional side view of a differential assembly according to an embodiment of the invention;
Figure 6 is an exploded view of a differential assembly according to an embodiment of the invention; and
Figure 7 is another cross-sectional view of the differential assembly of Figure 2.

### Detailed Description

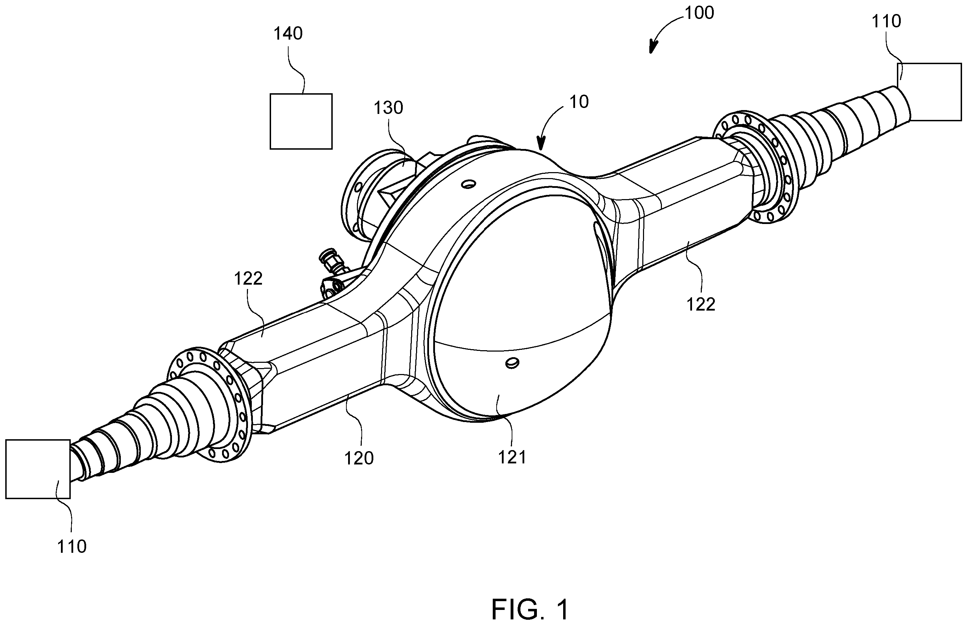

Referring to FIG. 1, an example of an axle assembly 100 is shown. The axle assembly 100 may be provided with a motor vehicle like a truck, bus, farm equipment, mining equipment, military transport or weaponry vehicle, or cargo loading equipment for land, air, or marine vessels.

The motor vehicle may include a trailer for transporting cargo in one or more embodiments.

The axle assembly 100 may be part of a vehicle drivetrain that may provide torque to one or more traction wheel assemblies that may include a tire mounted on a wheel. One or more axle assemblies 100 may be provided with the vehicle. For example, the axle assembly 100 may be a single drive axle assembly or may be configured as part of a tandem axle configuration or multi-axle configuration that may include a plurality of axle assemblies that may be connected in series.

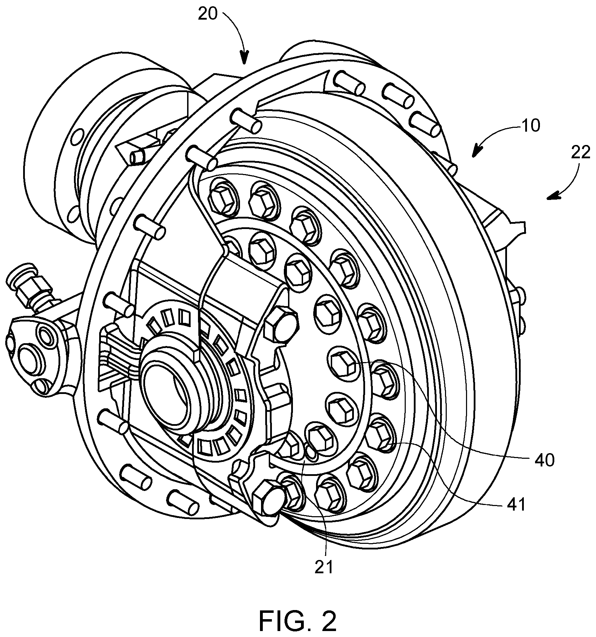

As is best shown with reference to FIGS. 1 and 2, the axle assembly 100 includes a differential assembly 10, and may further include at least one of an axle shaft 110, an axle housing 120 configured to at least partially enclose the axle shaft 110, a differential carrier 130, or an input yoke 140.

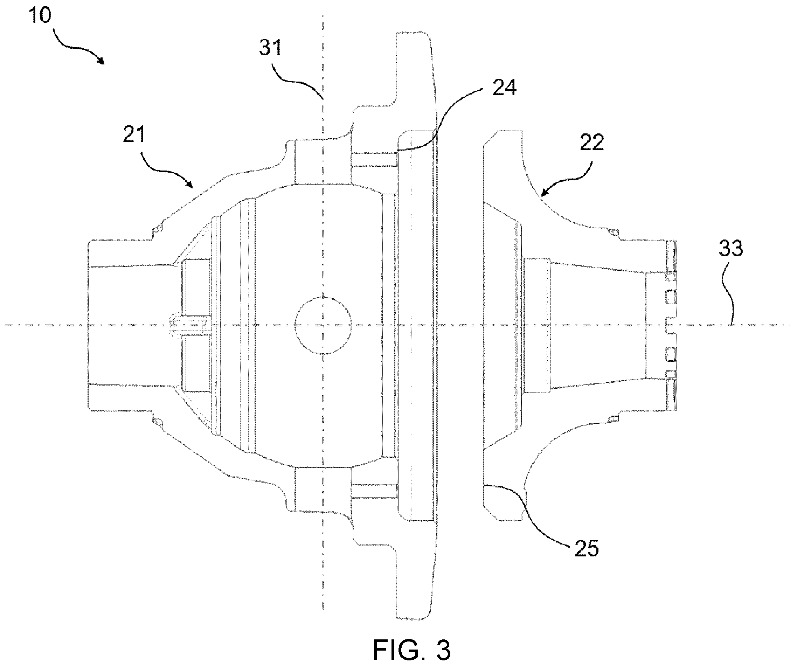

The axle shaft 110 may be configured to transmit a torque from a power source to the wheels of the vehicle or another rotating element. The axle shaft 110 may be coupled to the differential 30, which is shown in FIG. 3 to FIG. 7. The axle shaft 110 may have two parts, which are each connected to a wheel or a rotatable part not shown on one end and a differential side gear on the other end.

As shown in FIG. 1, an axle housing 120 may be a body which is configured to at least partially enclose the axle shaft 110, thereby shielding the differential assembly 10, in particular the elements that may not be inside the differential gear such as the ring gear 34, from the environment.

In FIG. 1, the axle housing 120 does not entirely surround the axle shaft 110. Instead, it has a spherical portion 121 that encloses the differential assembly 10 as well as two elongated portions 122 that are connected to the spherical portion 121 which enclose part of the axle shaft 110.

As shown in FIG. 1, a differential carrier 130 may be mounted to the housing of the axle 120, in particular to the spherical portion 121. The differential carrier 130 may support components of the differential assembly. For example, the differential carrier 130 may have one or more bearing supports that may receive or support a roller bearing assembly that may rotatably support the differential assembly.

In FIG. 1, the differential carrier 130 is arranged on a side of the differential assembly 10 that is perpendicular to both ends of the axle and facing towards the input yoke 140.

An input yoke 140, in particular as shown in FIG. 1, may be considered as a device that is coupled to a drivetrain component, such as a drive shaft, that may be coupled to an output of a vehicle transmission or transfer case, which in turn may receive torque from a vehicle power source, such as an engine or motor. Alternatively, the input yoke 140 may be operatively connected to an output of another axle assembly.

The differential assembly 10 is now described in more detail in connection with FIGS. 2 to FIG. 7.

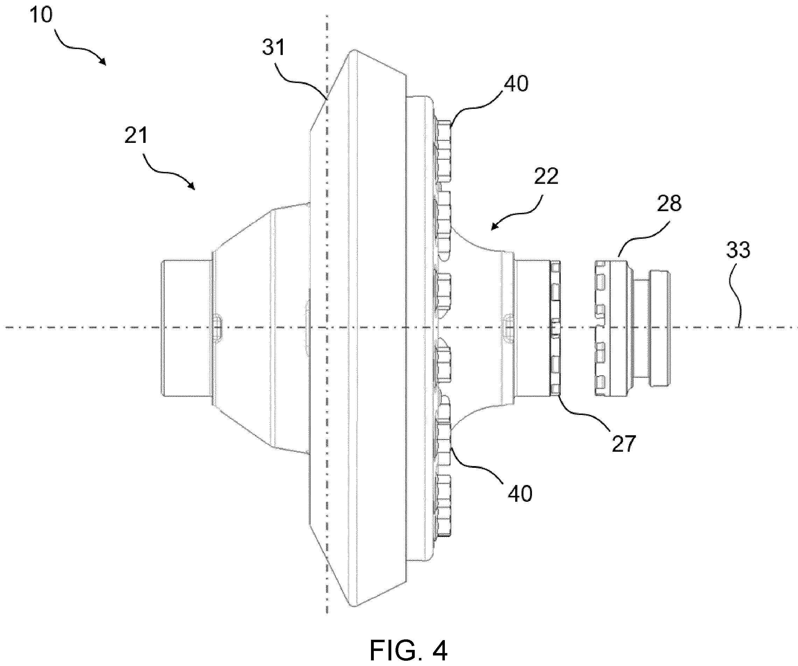

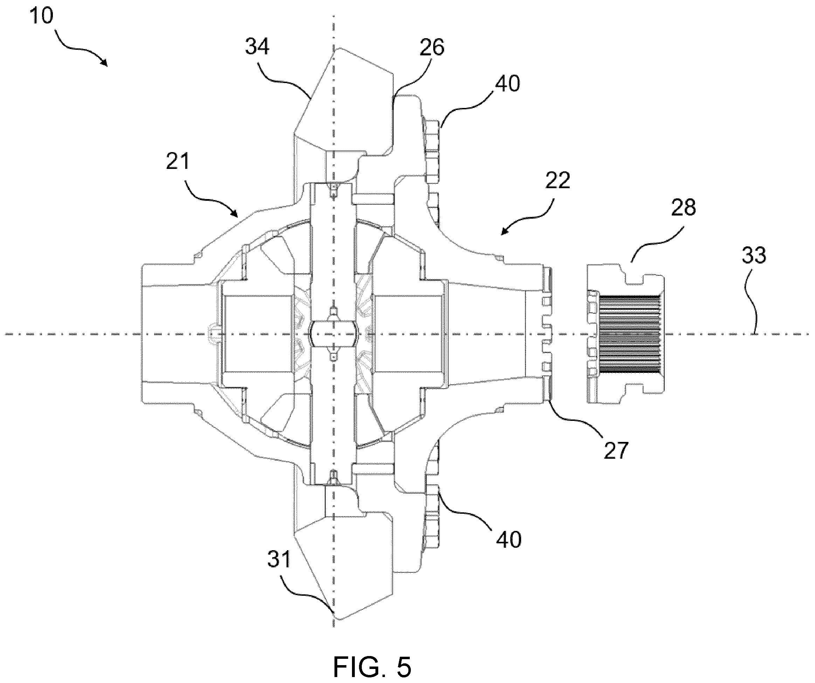

FIGS. 2 illustrates a differential assembly 10 comprising a differential case 20. FIG. 3 shows a cross-sectional view of that differential assembly 10 with a first case portion 21 and a second case portion 22. configured to hold a differential 30 with a spider gear assembly 32 (shown FIG. 5 to FIG. 7). The position where the center of the spider gear assembly 32 is arranged is marked with a circle in FIG. 3. A central plane 31 of the spider gear assembly 32 is perpendicular to a rotational axis 33 of a ring gear 34 (ring gear 34 being shown in FIG. 4 to FIG. 7) of the differential. In FIG. 3, the first case portion 21 and the second case portion 22 are not yet connected. In FIG. 4, the first case portion 21 is connected to the second case portion 22 with at least one removable fastener 40. As can be seen e.g. in FIG. 3 and FIG. 4, the connection of the first case portion 21 to the second case portion 22 is offset relative to the central plane 31.

The first case portion 21 and the second case portion 22 can be easily connected and disconnected with the removeable fastener 40. This way, the differential assembly 10 can be maintained cost effectively, as faulty parts can be individually replaced without replacing the whole assembly 10. The offset connection allows for easier separation of the case portions 21, 22, facilitating access to the spider gear assembly 32 for maintenance. For example, the larger of the first or second case portion 21, 22 can be removed to gain access to most of the parts in the differential 20, wherein the smaller part of the first or second case portion 21, 22 can remain in place, holding the differential 30. Alternatively, the smaller portion can also be removed leaving the larger portion in place. Removing a smaller portion requires less effort and time, making maintenance more efficient. In summary, the connection of the first case portion 21 to the second case portion 22 being offset relative to the central plane 31 allows for a flexible, efficient access to the differential 30 and improved maintenance.

As e.g. can be seen in FIG. 1 and FIG. 2, the differential case 20 may have a sphere-like shape, wherein the two parts 21, 22 form a bigger and a smaller part of this sphere-like shape.

The shape may be aligned around the spider gear assembly 32 at least on the inside of the differential case 20 or on the outside of the differential case 20.

Optionally, the differential assembly 10 may comprise the first case portion 21 connected to the second case portion 22 exclusively with the at least one removable fastener 40. In the embodiment shown in FIG. 4, the first case portion 21 is connected to the second case portion 22 exclusively with a multitude of removable fasteners 40.

Using only removable fasteners 40 simplifies disassembly and reassembly, making it easier to replace faulty parts. Fewer tools, in particular only one, are required to disconnect the differential case 20 if the connection is solely established by the removable fastener 40.

As shown in FIG. 2 and FIG. 4 to FIG. 7, a plurality of removeable fasteners 40 may be provided. These may be arranged along a ringlike shape around the area where the first and second case portion 21, 22 are connected to each other.

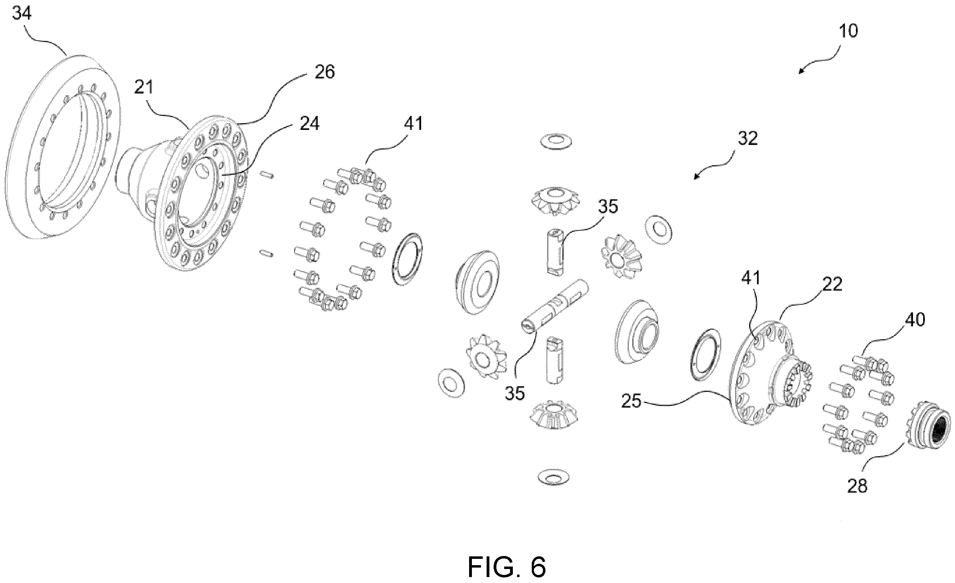

Now turning to the exploded view in FIG. 6, it is shown that the ring gear 34 may be connected to the first portion 21 through ring gear connectors 41, which may also be configured to be removable in the same way as the removable fastener 40. The connected ring gear 34 is shown in FIG. 4 and FIG. 5.

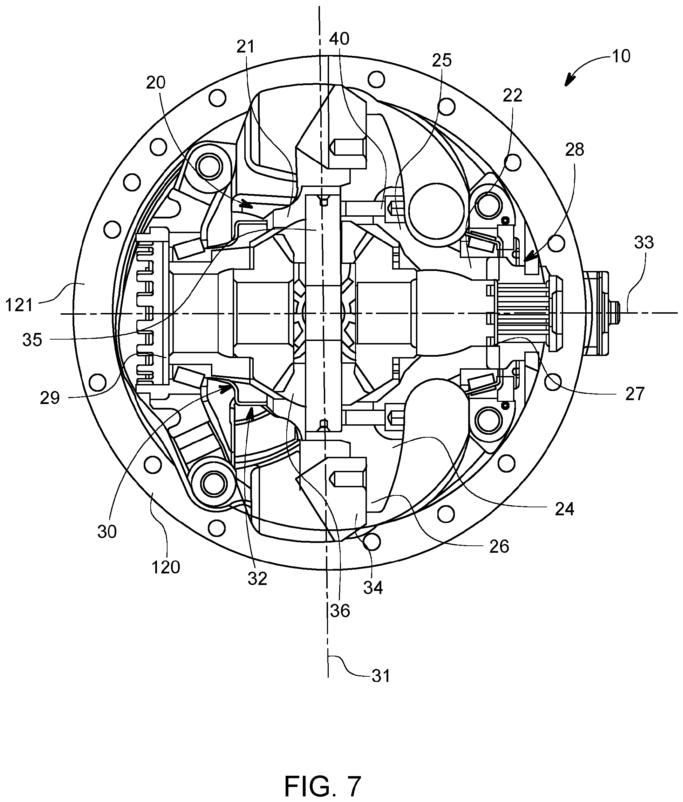

Optionally, the differential assembly 10 may comprise the at least one removable fastener 40 facing a shaft 35 of a spider gear 36. This is illustrated best in FIG. 6 and FIG. 7.

To allow for the at least one removable fastener 40 to face the shaft 35 of the spider gear 36, the first and/or second portion 21, 22 of the case 20 may have a through hole 41. In FIG. 6, the through hole 41 is referenced for the second portion case 22 only, but may also be present in the first case portion 21. The through hole 41may be used as a service opening for maintenance when the removeable fastener 40 is removed.

The removable fastener 40 facing the spider gear shaft 35 ensures secure positioning while allowing for straightforward replacement of the gear.

As shown in FIG. 4 and FIG. 5, the differential assembly 10 may comprise the second case portion 22 having a spline 27 configured to engage with a differential lock 28.

As spline 27 may be considered as a ridge or tooth that matches with a groove in a mating piece and transfers torque to it, maintaining the angular correspondence between them.

Optionally, the second case portion 22 may have a spline 27 configured to engage with a differential lock 28.

In other words, the second case portion 22 may have a ridge or tooth that engages with corresponding grooves in a differential lock 28.

This way, the second case portion 22 can directly engage with the differential lock 28, which improves the mechanical stability and the durability of the connection. Further, the connection via a spline 27 can be easily dismounted for maintenance.

Optionally, the spline 27 may be induction hardened.

Induction hardening may be considered as a type of surface hardening in which a metal part, in particular the spline 27 or a portion of the second case portion 22 including the spline 27, is induction-heated and then quenched. The quenched metal undergoes a martensitic transformation, increasing the hardness of the part. This has the advantage that not the whole part has to undergo the treatment, so that the hardening is only affecting the spline 27.

Although not absolutely necessary, hardening the spline 27 improves its mechanical resistance when engaging with a differential lock 28, ensuring a smooth movement and a long lifetime.

Optionally, the first case portion 21 may have a gear mounting flange 29, as shown in FIG. 7.

A gear mounting flange 29 may be understood as a flange that is configured to mount a part which has a gear. It may be, as shown in FIG. 7, arranged on one end of the first case portion 21, in particular the end facing away from the spider gear assembly 32.

Optionally, the first case portion 21 may be gearless.

In other words, the first case portion 21 may not directly engage with other gears, teeth, grooves etc.

This way, the first case portion 21 may not have any portions that require a hard material. Instead, a material that is lighter and or more cost effective may be used. This may also improve the cost for maintenance.

Optionally, the differential assembly 10 may comprise the first case portion 21 and the second case portion 22 at least partially designed as solids of revolution and arranged concentric to one another.

Concentric design of solids of revolution ensures balanced rotation, reducing wear and tear, and simplifying maintenance.

In the embodiments shown, the differential case 20 is sphere-like. However, other forms, such as cylindrical or ellipsoid, are also possible.

Turning back to FIG. 3 and FIG. 4, it may be provided that the differential assembly 10 comprises the first case portion 21 having a first connection portion 24 configured to be connected to a second connection portion 25 of the second case portion 22.

Clearly defined connection portions make it easier to align and connect the case portions 21, 22, streamlining the maintenance process.

As seen in FIG. 5, the connecting portions 24, 25 may lay flat against each other when the first and second case portions 21, 22 are connected.

As shown in FIG. 3, the differential assembly 10 may comprise the first connection portion 24 being concentric to the second connection portion 25.

Concentric connection portions 24, 25 help to ensure precise alignment, reducing the risk of misalignment during reassembly. It may also be provided that the first and second connecting portion 24, 25 comprise a recess on one portion and a corresponding protrusion on the other portion configured to interlock when the parts are connected. This further improves the mechanical stability of the connection and helps connecting the two case portions 21, 22 when they are separated before assembly or for maintenance.

Optionally, the differential assembly 10 may comprise the first connection portion 24 and the second connection portion 25 configured to lie at least partially flat against each other when the first connection portion 24 and the second connection portion 25 are connected to one another.

Flat connection surfaces provide a stable and secure fit, making it easier to separate and reassemble the case portions.

Optionally, the differential assembly 10 may comprise at least the first connection portion 24 or the second connection portion 25 having a circular ring, which can be seen in FIG. 6.

Circular ring surfaces facilitate smooth rotation and easier alignment during maintenance.

Further shown in FIG. 6 and 4 is that the differential assembly 10 may comprise the first case portion 21 having a flange 26 configured to be connected to the ring gear 34.

The flange 26 connection to the ring gear 34 allows for easy removal and replacement of the ring gear 34 during maintenance.

Optionally, the differential assembly 10 may comprise the flange 26 being concentric to the rotational axis 33 of the ring gear 34.

Concentric flange 26 and rotational axis 33 ensure proper alignment, simplifying the reassembly process.

Optionally, the differential assembly 10 may comprise the first case portion 21 made of a different material than the second case portion 22.

Different materials for the case portions allow for cost-effective manufacturing and targeted material use based on stress requirements.

Optionally, the differential assembly 10 may comprise the first case portion 21 at least partially made of ductile iron.

Using ductile iron for the first case portion 21 provides durability and strength where needed, while still allowing for cost effectiveness.

Optionally, the differential assembly 10 may comprise the second case portion 22 at least partially made of steel.

Steel for the second case portion 22 offers robustness and longevity, reducing the frequency of maintenance. Furthermore, if the second case portion 22 is smaller than the first case portion 21, the overall cost of the assembly may be reduced if only the second case is made of a steel and the first case portion 21 is made of a less costly material such as ductile iron.

Optionally, the differential assembly 10 may comprise the second case portion 22 connected to the differential lock 28.

Connection to the differential lock 28 allows for straightforward disconnection and maintenance of the lock mechanism.

Although the embodiments in the figures show screws with nuts as removeable fasteners 40, the differential assembly 10 may generally comprise the removable fastener 40 configured as at least one of a bolt or a nut and a stud.

Bolts provide a strong and secure connection that can be easily removed and reinstalled, allowing for quick access to internal parts. Nuts can be easily unscrewed and reused, facilitating the disassembly and reassembly of the differential case 20 for maintenance. Studs offer a fixed point for alignment, making it straightforward to reconnect the portions 21, 22 of differential case 20 accurately after replacing internal components.

Where the word 'or' appears, this is to be construed to mean 'and/or'. This is such that items referred to are not necessarily mutually exclusive and may be used in any appropriate combination. In list of items, the penultimate item in a list may not be separated by a comma but is still meant to be part of the list.

The invention has been described above with reference to one or more specific embodiments. However, the description is not exhaustive, and the present invention is not limited to the embodiments described. Various changes and modifications can be made without departing from the scope of the invention as defined in the claims. For example, the differential assembly may be at least partially made of plastics. Further, the removeable fastener may be configured as a clip mechanism or a bayonet mount.

## Claims

1. A differential assembly (10) comprising
a differential case (20) having a first case portion (21) and a second case portion (22), configured to hold a differential (30) with a spider gear assembly (32),
wherein a central plane (31) of the spider gear assembly (32) is perpendicular to a rotational axis (33) of a ring gear (34) of the differential (30),
wherein the first case portion (21) is connected to the second case portion (22) with at least one removable fastener (40), and
wherein the connection of the first case portion (21) to the second case portion (22) is offset relative to the central plane (31).

2. Differential assembly (10) according to claim 1,
wherein the first case portion (21) is connected to the second case portion (22) exclusively with the at least one removable fastener (40).

3. Differential assembly (10) according to claim 1 or 2,
wherein the second case portion (22) has a spline (27) configured to engage with a differential lock (28).

4. Differential assembly (10) according to claim 3,
wherein the spline (27) is induction hardened.

5. Differential assembly (10) according to one of the previous claims,
wherein the first case portion (21) has a gear mounting flange (29).

6. Differential assembly (10) according to one of the previous claims,
wherein the first case portion (21) is gearless.

7. Differential assembly (10) according to one of the previous claims,
wherein the first case portion (21) and the second case portion (22) are at least partially designed as solids of revolution and arranged concentric to one another.

8. Differential assembly (10) according to one of the previous claims,
wherein the first case portion (21) has a first connection portion (24) configured to be connected to a second connection portion (25) of the second case portion (22), in particular
wherein the first connection portion (24) is concentric to the second connection portion (25) and/or
wherein the first connection portion (24) and the second connection portion (25) are configured to lie at least partially flat against each other when the first connection portion (24) and the second connection portion (25) are connected to one another.

9. Differential assembly (10) according to one of the previous claims,
wherein at least the first connection portion (24) or the second connection portion (25) has a circular ring.

10. Differential assembly (10) according to one of the previous claims,
wherein a first case portion (21) has a flange (26) configured to be connected to the ring gear (34), in particular
wherein the flange (26) is concentric to the rotational axis (33) of the ring gear (34).

11. Differential assembly (10) according to one of the previous claims,
wherein the first case portion (21) is made of a different material than the second case portion (22).

12. Differential assembly (10) according to one of the previous claims,
wherein the first case portion (21) is at least partially made of ductile iron and/or
wherein the second case portion (22) is at least partially made of steel.

13. Differential assembly (10) according to one of the previous claims,
wherein the second case portion (22) is connected to the differential lock (28).

14. Differential assembly (10) according to claim one of the previous claims,
wherein the removable fastener (40) is configured as at least one of a bolt, or a nut and a stud.

15. An axle assembly (100) comprising
a differential assembly (10), in particular one according to one of the previous claims,
comprising a differential case (20) having a first case portion (21) and a second case portion (22), configured to hold a differential (30) with a spider gear assembly (32), wherein a central plane (31) of the spider gear assembly (32) is perpendicular to a rotational axis (33) of a ring gear (34) of the differential (30), wherein the first case portion (21) is connected to the second case portion (22) with at least one removable fastener (40), wherein the connection of the first case portion (21) to the second case portion (22) is offset relative to the central plane (31), and
at least an axle shaft (110), an axle housing (120) configured to at least partially enclose the axle shaft (110), a differential carrier (130), or an input yoke (140).
